# FASCICULE DE BREVET EUROPEEN

(11) **EP 2 578 383 B1**
(45) Date de publication et mention de la délivrance du brevet: **06.04.2016**
(21) Numéro de dépôt: 12187138.8
(22) Date de dépôt: 03.10.2012
(51) Int. Cl.: B29C 70/34, B29C 70/54, B29C 33/00

(54) **Procédé et dispositif pour la réalisation d'un trou à bord tombé dans un panneau composite**
Verfahren und Vorrichtung zur Erstellung eines Bördellochs in einer Verbundplatte
Method and device for making a swaged hole in a composite panel

(30) Priorité: 03.10.2011 FR 1158919
(43) Date de publication de la demande: 10.04.2013
(73) Titulaire: DAHER AEROSPACE, 41400 Saint-Julien-de-Chedon (FR)
(72) Inventeur: Pelard, Alexandre, 44400 REZE (FR); Hugon, Michael, 44118 La Chevrolière (FR); Soubelet, Dominique, 37530 Nazelles (FR)
(74) Mandataire: Ipside

(56) Documents cités:
- WO-A1-2006/069989
- DE-A1-102007 004 314
- FR-A1- 2 820 359

## Description

L'invention concerne un procédé pour la réalisation d'un trou à bord tombé dans un panneau composite et un panneau obtenu par un tel procédé. L'invention est plus particulièrement, mais non exclusivement, adaptée à la réalisation d'un panneau composite à renfort fibreux continu, destiné à des applications aéronautiques.

Selon l'art antérieur, de tels trous peuvent être pratiqués dans un panneau plan métallique en alliage léger, utilisé par exemple comme cloison, afin de réaliser des traversées de ladite cloison par des systèmes, ou encore pour alléger ledit panneau. Ces trous, dont le contour peut être circulaire ou elliptique, comprennent des bords tombés, c'est-à-dire un retournement de la tôle dans une direction sensiblement normale à la surface du panneau sur le bord dudit trou. Ce bord tombé, en augmentant l'inertie de la section, augmente la rigidité du panneau vis-à-vis des sollicitations normales à sa surface, plus particulièrement dans la zone du trou. Ainsi, ces aménagements sont particulièrement intéressants pour des applications aéronautiques, car ce gain de rigidité est obtenu sans ajout de masse et même avec un enlèvement de matière. Pour un panneau métallique, lesdits trous à bord tombé, dont les dimensions sont couramment comprises entre 50 mm et 200 mm, sont réalisés par une combinaison de procédés d'emboutissage et de découpe tel que le procédé dit Guérin (formage par bloc en caoutchouc) ou le formage par vessie hydraulique, associés, si nécessaire à des détourages mécaniques. Dans la cas d'un panneau en matériau composite à renfort fibreux continu, ces procédés de formage ne sont pas applicables. Ainsi, ledit panneau composite sont couramment renforcé par des plis de stratification supplémentaires dans la zone entourant un perçage, ou par l'assemblage de pièces supplémentaires prenant en sandwich les bords du trou. Le document EP 1 537 983 A1, décrit une telle solution de renfort du bord d'un trou par une pièce rapportée. Ces solutions de l'art antérieur sont défavorables du point de vue de la masse.

Plus particulièrement lorsque le matériau constituant le panneau composite est un composite à matrice thermoplastique à haute performance, tel que le polyétheréthercétone, ou PEEK, le formage par vessie nécessite une vessie susceptible

Ainsi le document WO 2006 069989 décrit un procédé pour la réalisation d'un trou à bord tombé dans un panneau composite comprenant une matrice thermodurcissable, le formage du bord tombé étant réalisé par une portion de tôle de compactage déformable durant la cuisson du panneau composite. Ce procédé de l'art antérieur nécessite que la portion de tôle de compactage, initialement plane, soit déformée durant le processus de formage et de cuisson. Ainsi, ce procédé n'est pas applicable de manière économique pour la réalisation d'un panneau constitué d'une matrice PEEK avec un renfort fibreux.

Le document DE 10 2007 004314 décrit un dispositif et un procédé pour la création d'un bossage dans un panneau constitué d'un matériau composite stratifié. Le procédé exposé dans ce document consiste, après un drapage automatique d'une stratification constituée de plis fibreux dans une matrice thermodurcissable, à envelopper ladite stratification à l'état cru entre deux couches d'élastomère, puis d'installer cette ensemble sur un gabarit comprenant une cavité correspondant à la forme en creux du bossage à réaliser. Au cours du tirage au vide préalable à la cuisson de la stratification, l'ensemble est déformé dans ladite cavité au cours d'une étape de formage. Ainsi, ce procédé n'est pas adapté à une stratification comprenant des plis primprégnés d'un polymère thermoplastique car elle ne permet pas, ni la consolidation de cette stratification si celle-ci n'est pas consolidée avant l'étape de formage, ni la mise en fusion et la reconsolidation de ladite stratification si celle-ci est préconsolidée avant l'opération de formage.

L'invention vise à résoudre les inconvénients de l'art antérieur et propose à cette fin un procédé pour la réalisation d'un panneau constitué d'un composite à renfort fibreux stratifié dans une matrice polymère thermoplastique, ledit panneau comportant un trou à bord tombé, lequel procédé comprend les étapes consistant à :
a. installer sur un marbre de drapage un poinçon cylindrique épaulé, dont les flancs reproduisent le contour du bord tombé du trou et comportant, sur sa face opposée à celle du marbre, une face d'appui en saillie, en retrait diamétral par rapport aux flancs dudit poinçon et d'une hauteur égale ou supérieure à l'épaisseur de la stratification ;
b. déposer sur ledit marbre des lés de fibres pré-imprégnées du polymère thermoplastique et comportant une découpe pour recouvrir le poinçon sauf sur sa face d'appui, jusqu'à obtenir la stratification désirée ;
c. poser sur la face d'appui du poinçon une tôle de lissage rigide de surface inférieure ou égale à celle de l'ouverture du trou à bord tombé ;
d. ensacher l'empilement surmonté d'un panneau conformateur rigide apte à épouser la surface de la stratification créée à l'étape c) ;
e. consolider le panneau en lui faisant subir un cycle de chauffage refroidissement sous pression, lequel cycle comprend un chauffage à une température supérieure ou égale à la température de fusion du polymère thermoplastique.

Ainsi, en plaçant le relief du côté de l'ensachage et par la coopération entre la partie en saillie du poinçon et la tôle de lissage, un jeu peut être ménagé localement dans la partie des lés se trouvant sous la tôle de lissage. Ce jeu permet de compenser la dilatation différentielle entre l'outillage et la stratification, tout en assurant un la dilatation différentielle entre l'outillage et la stratification, tout en assurant un compactage efficace de l'ensemble du panneau. La partie faiblement compactée, se trouvant sous la tôle de lissage lors de la consolidation, est ensuite facilement éliminée par une opération de détourage produisant des bords nets.

L'invention concerne également un outillage pour la mise en oeuvre du procédé objet de l'invention, lequel outillage comprend :
i. un marbre ;
ii. un poinçon cylindrique épaulé comportant une surface dite de pose pour son installation en saillie sur ledit marbre, et comportant un premier tronçon s'étendant depuis ladite surface de pose et dont les flancs (225) reproduisent le contour du bord tombé ;
iii. une tôle de lissage rigide de surface inférieure ou égale à celle de l'ouverture du trou à bord tombé apte à prendre appui sur l'extrémité du poinçon opposée à la surface de pose, laquelle extrémité constitue une face d'appui pour ladite tôle de lissage ;
iv. un panneau conformateur rigide.

Ledit outillage, en plaçant ledit poinçon en saillie par rapport au marbre, permet d'obtenir le relief en bord tombé lors de l'opération de compactage consolidation en appliquant une pression sur toute la stratification constituant le panneau, alors que le poinçon reste statique. Il évite ainsi l'utilisation d'un dispositif poinçon-matrice, à chaud, avec les difficultés qu'un tel système comporte vis-à-vis de la dilatation thermique.

L'invention peut être mise en oeuvre selon les modes de réalisation avantageux exposés ci-après, lesquels peuvent être considérés individuellement ou selon toute combinaison techniquement opérante.

Avantageusement, l'étape e), de consolidation, du procédé objet de l'invention comprend les opérations consistant à :
ei. chauffer l'empilement sans appliquer de pression sur celui-ci jsuqu'à une température, dite de conformation, supérieure ou égale à la température de transition vitreuse du polymère constituant la matrice et inférieure égale à la température de fusion dudit polymère ;
eii. appliquer une pression sensiblement normale à l'empilement lorsque la température de conformation est atteinte ;
eiii. continuer le chauffage sous pression jusqu'à une température supérieure ou égale à la température de fusion du polymère constituant la matrice.

Ainsi, l'application de la pression sur l'empilement est réalisée lorsque les lés de l'empilement sont suffisamment souples pour pouvoir être appliqués sur les flancs du poinçon.

Avantageusement, le panneau conformateur est constitué d'un matériau apte à être formé à l'état cru sur l'empilement et le procédé comprend les étapes consistant à :
f. former à la forme de l'empilement le panneau conformateur à l'état cru lors de la réalisation de l'étape e) pour le premier panneau d'une série réalisée selon le procédé de la revendication 1
g. réaliser une cuisson du panneau conformateur de sorte à stabiliser sa forme obtenue lors de l'étape f).

Ainsi, en formant directement le panneau conformateur sur l'empilement lors de la réalisation du premier panneau, le panneau conformateur est parfaitement adapté à la forme de la pièce et assure une pression de compactage uniforme sur toute la surface, y compris sur le bord tombé.

Selon un mode de réalisation particulier du procédé objet de l'invention ,le marbre comprend une poche en creux par rapport à la surface dudit marbre et que ledit procédé comprend, avant l'étape b), les étapes conistant à :
h. placer dans ladite poche une plaque de renfort ou patch constituée d'une plaque pré-consolidées d'un composite à renfort fibreux dans une matrice thermoplastique ayant une température de fusion égale ou inférieure à la température de fusion de la matrice des lés pré-imprégnés déposés à l'étape b).

La nature thermoplastique du polymère imprégnant les lés et constituant la plaque de renfort permet d'obtenir la soudure de ladite plaque au cours de l'opération de compactage consolidation avec la peau du panneau. L'utilisation d"une plaque de renfort pré-consolidée permet de faciliter le drapage et permet de localiser de manière précise le renfort à la surface du panneau.

Avantageusement, la courbe directrice du premier tronçon du poinçon de l'outillage objet de l'invention est une ellipse. Ainsi, le trou à bord tombé peut être orienté favorablement par rapport au flux d'effort subi par le panneau.

Avantageusement, le poinçon comprend un deuxième tronçon cylindrique en retrait diamétral par rapport au premier tronçon au sommet duquel se trouve une face d'appui sensiblement parallèle à la surface de pose. Ladite surface d'appui permet de recevoir une plaque de lissage pour préserver la partie de stratification se situant sous ladite plaque de lissage de la pression de compactage et autoriser les glissements interlaminaires dans cette zone lors de l'opération de compactage-consolidation de la stratification.

Avantageusement, la courbe directrice du deuxième tronçon comprend une partie rectiligne. Cette partie rectiligne est utilisée comme guide pour le drapage des lés au voisinage du poinçon.

Selon un mode de réalisation particulier de l'outillage objet de l'invention, le marbre comprend une poche apte à recevoir un élément de renfort, ou patch, pour sa co-consolidation avec le panneau. Ainsi, l'outillage objet de l'invention permet d'obtenir la peau d'un panneau composite, finie, comportant un renfort local, en une seule opération.

L'invention est exposée ci-après selon ses modes de réalisation préférés, nullement limitatifs, et en référence aux figures 1 à 6, dans lesquelles :
- la figure 1 est un vue de face d'un panneau composite selon un exemple de réalisation de l'invention et comporte deux vues partielles de profil selon les coupes AA et BB définies sur cette même vue ;
- la figure 2 montre en perspective et en éclaté selon un point de vue de dessus un exemple d'outillage pour la réalisation du panneau de la figure 1 et présente selon une vue de détail Z, en perspective, un exemple de réalisation d'un poinçon pour la création d'un trou à bord tombé dans ledit panneau ;
- la figure 3A est une vue en cours de drapage d'un poinçon selon une coupe CC définie figure 2 ;
- la figure 3B représente la même vue que la figure 3A mais au cours de l'opération de compactage consolidation subséquente ;
- la figure 4 est une vue selon une coupe DD définie figure 2, de l'outillage présenté sur cette même figure 2 en cours de drapage après réalisation de l'ensachage ;
- la figure 5 illustre par un organigramme les différentes étapes du procédé objet de l'invention ;
- et la figure 6 représente un diagramme d'évolution temporelle de la pression, et de la température appliquées à l'empilement durant le cycle de compactage consolidation, selon un exemple de réalisation du procédé objet de l'invention.

Lorsque plusieurs entités de même nature sont présentes elle sont désignées dans leur ensemble par un repère et de manière spécifique par le même repère accompagné d'un indice.

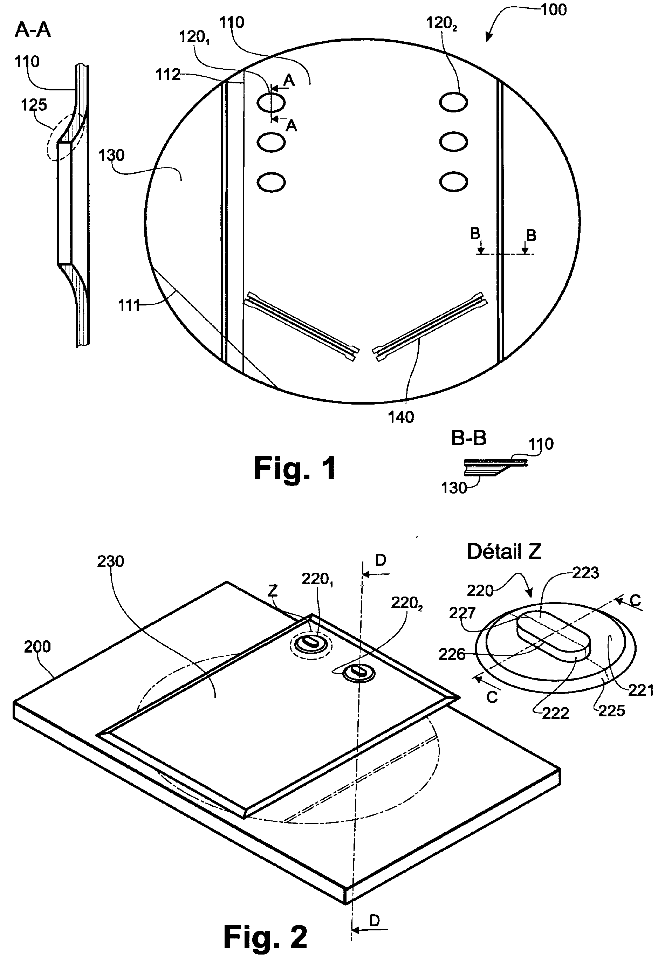

Figure 1, selon un exemple de réalisation, l'invention concerne un panneau composite (100) raidi. Un tel panneau constitue par exemple une cloison isolant le fuselage d'un l'aéronef du groupe auxiliaire de puissance dudit aéronef. Ce panneau comprend une peau (110) stratifiée, comprenant un empilement de plis de fibres continues (111, 112), d'orientation définie, dans une matrice thermoplastique, lesdites fibres s'étendant d'un bord à l'autre du panneau (100). À titre d'exemple non limitatif, les fibres sont constituées de carbone et la matrice thermoplastique est constituée de polyétheréthercétone, ou PEEK. Le panneau (100) comporte des renforts locaux d'épaisseur (130), ou patchs, constitués de plis de stratification supplémentaires, de nature similaire à celle de la peau et co-consolidés avec ladite peau. Ledit panneau peut également comprendre des raidisseurs (140), lesquels sont rapportés par soudage après la consolidation dudit panneau. Finalement, le panneau (100) comporte des trous (120) traversant la peau. Lesdits trous (120) vus en section (A-A) comportent un bord tombé (125), sous la forme d'un retournement vers l'extérieur de la peau (100) au bord du trou.

Figure 2, selon un exemple de réalisation de l'invention, l'outillage pour la réalisation d'un tel panneau comprend :
- un marbre (200) ;
- un masque (230), qui posé sur ledit marbre (200) crée les poches aux emplacements des renforts d'épaisseur ou patchs ;
- une pluralité de poinçons (220) correspondant aux trous à bord tombé, lesquels poinçons sont, selon le mode de réalisation, posés sur la surface du marbre (200) ou sur la surface du masque (230).

Le masque peut avantageusement être constitué de plusieurs parties afin, notamment, de faciliter sa manipulation. Tant ledit masque (230) que les poinçons (220) peuvent être positionnés de manière précise par rapport au marbre (200) et l'un par rapport à l'autre par l'intermédiaire de piétages (non représentés).

Les poinçons (220) comprennent chacun deux tronçons (221, 222). Les flancs (225) du premiertronçon (221) du poinçon reproduisent sensiblement le profil visé pour le bord tombé (125). Le second tronçon (222) est en retrait diamétral par rapport au premier tronçon (221) et se termine par une surface d'appui (223). Ainsi le poinçon est de forme générale cylindrique, le premier tronçon étant, selon un mode de réalisation préféré, conique. La courbe directrice du cylindre ou du cône constituant le premier tronçon peut être un cercle ou une ellipse.

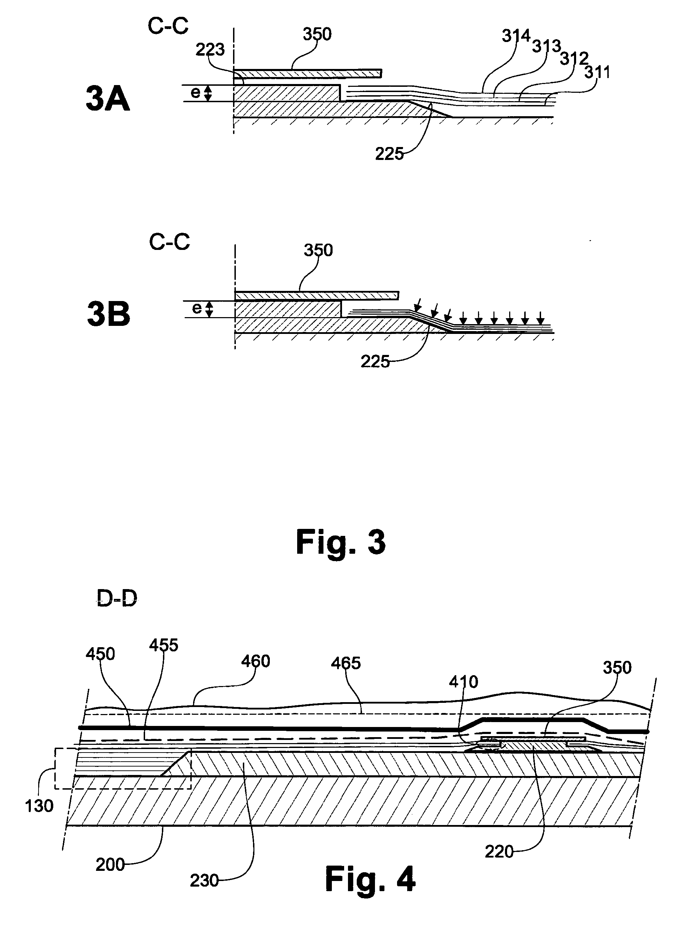

Figure 3A, le drapage d'une stratification de lés (311, 312, 313, 314) de fibres pré-imprégnées est réalisé sur l'outillage ainsi assemblé, les lés recouvrant le premier tronçon des poinçons, jusqu'au second tronçon de ceux-ci. Ainsi, lesdits lés reçoivent une découpe sommaire leur permettant de contourner ledit second tronçon lors du drapage. La hauteur en saillie (e) du second tronçon du poinçon par rapport audit premier tronçon est égale ou légèrement supérieure à l'épaisseur de la stratification. Selon un mode de réalisation, les lés sont constitués de fibres dites à hautes performances telles que des fibres de carbone collées sur un film thermoplastique. De tels lés sont relativement rigides et n'épousent pas spontanément la forme du relief créé par le poinçon sur le marbre. De plus de tels lés ne sont pas pégueux. Pour éviter que lesdits lés ne se déplacent ou se désorientent durant l'opération de drapage, ils sont avantageusement maintenus en position sur l'outillage par des points de soudure. Après drapage, une plaque de lissage (350) rigide est placée sur la surface d'appui (223) des seconds tronçons de chaque poinçon. Ladite plaque de lissage (350) peut être simplement posée sur la surface d'appui (223) du second tronçon ou peut être positionnée et maintenue sur cette surface par un piétage (non représenté).

En revenant sur la figure 2, le second tronçon (222) du poinçon comprend avantageusement une portion rectiligne (226) servant de guide pour le drapage des lés. Afin de simplifier la découpe des lés au passage du second tronçon (222) des poinçons (220), la juxtaposition desdits lés est avantageusement réalisée selon une ligne (227), sensiblement parallèle à la portion rectiligne (226) du second tronçon du poinçon et sensiblement centrée par rapport à ce second tronçon.

Figure 3B, au cours de l'opération de compactage -consolidation, les lés sont contraints d'épouser la forme du marbre et du poinçon par la pression de compactage. Pour ce faire, la pression de compactage ne doit être appliquée que lorsque la souplesses des lés est suffisante pour qu'ils puissent épouser cette forme. Ainsi, lorsque les lés sont initialement rigides, la pression de compactage n'est appliquée que lorsque la température est au moins supérieure à la température de transition vitreuse du polymère constituant la matrice du panneau.

Figure 4, les renforts d'épaisseur (130) sont placés côté marbre (200) et peuvent se présenter sous la forme de lés pré-imprégnés drapés en même temps que la peau. Toutefois, ces patchs (130) sont avantageusement constitués de plaques pré-consolidées d'un composite à renfort fibreux dans une matrice thermoplastique ayant une température de fusion égale ou inférieure à la température de fusion de la matrice des lés pré-imprégnés de la peau. Selon un mode de réalisation préféré, le polymère constituant la matrice des renforts pré-consolidés et le même que celui constituant la matrice de la peau. Un panneau conformateur (450) épousant le profil de l'empilement est avantageusement utilisé pour le compactage-consolidation de l'ensemble du panneau, des patchs (130) et la réalisation des bords tombés dans la même opération. Un tel panneau conformateur (450) est avantageusement constitué d'un matériau thermodurcissable résistant à haute température tel qu'un composite à base de mica ou un composite à renfort fibreux dans une matrice polymère inorganique à base d'aluminosilicates alcalins. De tels matériaux sont distribués sous des marques commerciales telles que MIGLASIL® ou PYROTOOL®. Ces matériaux présentent un coefficient de dilatation thermique très faible, considéré comme nul pour des applications pratiques. À l'état cru, ils peuvent être mis en forme à une température comprise entre 120 °C et 400 °C selon les variantes, puis stabilisés dans cette forme par cuisson. Une fois cuits, ils résistent à haute température, jusqu'à 1200 °C, sans perdre leur rigidité. Ainsi, le panneau conformateur (450) initialement plan est mis en forme sur l'outillage, lorsqu'il se trouve à l'état cru, par exemple lors de la réalisation du premier panneau. Puis, le panneau conformateur est cuit. Il peut alors être utilisé pour la réalisation de panneaux en série. Comme ce panneau conformateur (450) présente un faible coefficient de dilatation thermique et qu'il est mis en forme à chaud, directement sur l'outillage, il s'adapte parfaitement à la forme à compacter indépendamment de tout phénomène de dilatation différentielle et d'hyperstatisme, notamment, lorsque le panneau comporte plusieurs trous à bords tombés réalisés au cours de la même opération de compactage-consolidation. Un film polyimide (455) résistant à la température de fusion du polymère thermoplastique constituant la matrice du panneau est interposé entre la stratification et le panneau conformateur et réalise une barrière étanche vis-à-vis dudit polymère en fusion et le panneau conformateur (450). L'ensachage est terminé par un tissu drainant (465) et une vessie (460).

Les portions de plis (410) situées sous la plaque de lissage (350) ne subissent pas la pression du panneau conformateur (450) lors du compactage-consolidation et peuvent par conséquent glisser l'un par rapport à l'autre de sorte à compenser les phénomènes de dilatation différentielle entre la stratification et l'outillage, notamment lorsque le panneau comprend plusieurs trous à bords tombés. Cette partie (410) faiblement compactée est éliminée par détourage après consolidation du panneau.

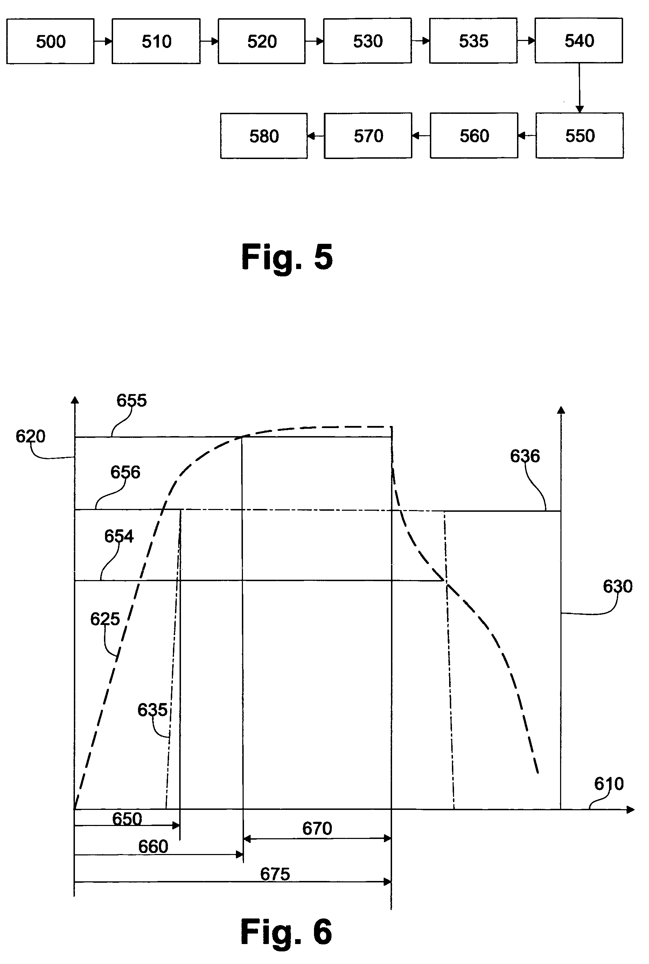

Figure 5, l'obtention du panneau selon l'invention comprend ainsi les phases consistant à assembler (500) les différents éléments (200, 230, 220) de l'outillage. Si le panneau comprend des patchs de renfort d'épaisseur (130) ceux-ci sont avantageusement installés au cours de l'étape suivante (510) à l'état pré-consolidés dans les espaces en creux formant des poches entre le masque (230) et le marbre (200). Les lés de fibres pré-imprégnées sont drapés sur l'ensemble au cours d'une étape de drapage (530), les lés étant prédécoupés autour des seconds tronçons des poinçons. Selon la dimension du panneau et l'importance de la série réalisée, cette découpe peut être réalisée manuellement durant le drapage au moyen d'une lame, en utilisant le second tronçon du poinçon comme guide. Le drapage étant terminé, l'ensemble est ensaché au cours d'une étape d'ensachage (540) consistant d'abord à poser (535) les plaques de lissage (350) sur le sommet des surfaces d'appui (223) des poinçons (220), puis, le film polyimide (455), le panneau conformateur (450), le tissu drainant (465) et la vessie. Avantageusement le film polyimide peut recevoir une pulvérisation d'un agent évitant toute adhésion avec le polymère en fusion lors de la phase de consolidation. L'ensachage (540) est réalisé de sorte à créer une chambre étanche entre la vessie (460) et le marbre (200). Cette chambre est chauffée (550) à une température au moins égale à la température de fusion du polymère constituant la matrice du panneau. Au cours du chauffage, lorsque la température de l'empilement est supérieure ou égale à la température de transition vitreuse (654) du polymère constituant la matrice, soit environ 170 °C pour le PEEK, mais inférieure ou égale à la température de fusion (655) de cette matrice, soit environ 400 °C pour le PEEK, la chambre constituée par l'ensachage est tirée au vide. Le tirage au vide de ladite chambre applique le panneau conformateur sur l'empilement, les lés étant alors suffisamment souples pour épouser les flancs du poinçon. Le chauffage est poursuivi jusqu'à la température de fusion.

Après un bref maintient (560) à cette température, l'ensemble est refroidi (570) ce qui a pour effet de condenser le polymère. Lorsque la température atteint la température de transition vitreuse (654) dudit polymère, le vide de la chambre est cassé. Le parachèvement (580) est réalisé après démoulage, et consiste essentiellement en des opérations de détourage du panneau, incluant le détourage des bords tombés (125).

Figure 6, sur un diagramme représentant l'évolution (625) de la température (620) et l'évolution de la pression (635) appliquée sur l'empilement en fonction du temps (610), la mise en pression de l'empilement, par tirage au vide de la chambre, est décalée du démarrage du chauffage d'un temps (650) correspondant à l'atteinte de la température de conformation (656) comprise entre la température de transition vitreuse (654) et la température de fusion (655) du polymère constituant la matrice du panneau. Ainsi, le temps total de chauffage (675) comprend un premier temps (650) de chauffage sans pression appliquée sur l'empilement, un temps de maintien (670) à une température supérieure ou égale à la température de fusion du polymère de la matrice. Selon un exemple de réalisation, la pression est appliquée par tirage au vide de la chambre, de sorte que ladite pression s'applique selon une valeur (636) sensiblement constante depuis le moment (650) d'application de celle-ci, jusqu'à ce que, après que le refroidissement ait débuté, la température de l'empilement atteigne une valeur inférieure ou égale à la température (654) de transition vitreuse du polymère constituant la matrice du panneau.

La description ci-avant montre que l'invention atteint les objectifs visés, en particulier elle permet la réalisation d'un panneau composite monobloc comprenant des traversées sous la forme de trous à bord tombé, mais aussi toutes les autres caractéristiques avantageuses, telles que les renforts locaux d'épaisseur, pour la mise en oeuvre d'un tel panneau dans le cadre d'applications aéronautique. Le procédé et l'outillage objet de l'invention permettent d'obtenir l'ensemble de ces caractéristiques en une seule opération de compactage.

## Revendications

1. Procédé pour la réalisation d'un panneau (100) constitué d'un composite à renfort fibreux stratifié dans une matrice polymère thermoplastique, ledit panneau comportant un trou (120) à bord tombé, **caractérisé en ce qu'**il comprend les étapes consistant à :
a. installer (500) sur un marbre (200) de drapage un poinçon (220) cylindrique épaulé dont les flancs (225) reproduisent le contour du bord tombé (125) dudit trou et comportant sur sa face opposée à celle du marbre une face d'appui (223) en saillie, en retrait diamétral par rapport aux flancs (225) dudit poinçon (220) et d'une hauteur (e) égale ou supérieure à l'épaisseur de la stratification ;
b. déposer (530) sur ledit marbre des lés (311, 312, 313, 314) de fibres pré-imprégnées du polymère thermoplastique et comportant une découpe pour recouvrir le poinçon sauf sur sa face (223) d'appui, jusqu'à obtenir la stratification désirée ;
c. poser (535) sur la face d'appui (223) du poinçon une tôle de lissage (350) rigide de surface inférieure ou égale à celle de l'ouverture du trou (120) à bord tombé ;
d. ensacher (540) l'empilement surmonté d'un panneau (450) conformateur rigide apte à épouser la surface de la stratification créée à l'étape c) ;
e. consolider (550, 560, 570) le panneau (100) en lui faisant subir un cycle de chauffage refroidissement sous pression, lequel cycle comprend un chauffage à une température (655) supérieure ou égale à la température de fusion du polymère thermoplastique.

2. Procédé selon la revendication 1, **caractérisé en ce que** l'étape e) de consolidation comprend les opérations consistant à :
ei. chauffer (650) l'empilement sans appliquer de pression sur celui-ci jusqu'à une température (656), dite de conformation, supérieure ou égale à la température de transition vitreuse (654) du polymère constituant la matrice et inférieure égale à la température de fusion (655) dudit polymère ;
eii. appliquer une pression (636) sensiblement normale à l'empilement lorsque la température de conformation (656) est atteinte ;
eiii. continuer le chauffage sous pression (636) jusqu'à une température (655) supérieure ou égale à la température de fusion du polymère constituant la matrice.

3. Procédé selon la revendication 1, **caractérisé en ce que** le panneau conformateur (450) est constitué d'un matériau apte à être formé à l'état cru sur l'empilement et que le procédé comprend les étapes consistant à :
f. former à la forme de l'empilement le panneau conformateur à l'état cru lors de la réalisation de l'étape e) pour le premier panneau d'une série réalisée selon le procédé de la revendication 1
g. réaliser une cuisson du panneau conformateur (450) de sorte à stabiliser sa forme obtenue lors de l'étape f).

4. Procédé selon la revendication 1 **caractérisé en ce que** le marbre (200) comprend une poche en creux par rapport à la surface dudit marbre et que ledit procédé comprend, avant l'étape b), les étapes consistant à :
h. placer (510) dans ladite poche une plaque de renfort (130) ou patch constituée d'une plaque pré-consolidées d'un composite à renfort fibreux dans une matrice thermoplastique ayant une température de fusion égale ou inférieure à la température de fusion de la matrice des lés pré-imprégnés déposés à l'étape b).

5. Outillage pour la mise en oeuvre d'un procédé selon la revendication 1, **caractérisé en ce qu'**il comprend :
i. un marbre (200) ;
ii. un poinçon (220) cylindrique épaulé comportant une surface dite de pose pour son installation en saillie sur ledit marbre (200), et comportant un premier tronçon (221) s'étendant depuis ladite surface de pose et dont les flancs (225) reproduisent le contour du bord tombé ;
iii. une tôle de lissage (350) rigide de surface inférieure ou égale à celle de l'ouverture du trou (120) à bord tombé apte à prendre appui sur l'extrémité du poinçon opposée à la surface de pose, laquelle extrémité constitue une face (223) d'appui pour ladite tôle de lissage ;
iv. un panneau (450) conformateur rigide.

6. Outillage selon la revendication 5, **caractérisé en ce que** la courbe directrice du premier tronçon (221) du poinçon est une ellipse

7. Outillage selon la revendication 6, **caractérisé en ce que** le poinçon (220) comprend un deuxième tronçon (222) cylindrique en retrait diamétral par rapport au premier tronçon (221) au sommet duquel se trouve la face d'appui (223) sensiblement parallèle à la surface de pose.

8. Outillage selon la revendication 7, **caractérisé en ce que** la courbe directrice du deuxième tronçon (222) comprend une partie rectiligne (226).

9. Outillage selon la revendication 5, **caractérisé en ce que** le marbre (200) comprend une poche apte à recevoir un élément de renfort (130) ou patch pour sa co-consolidation avec le panneau.

## Patentansprüche

1. Herstellungsverfahren einer Platte (100) aus Verbundstoff mit einer Schichtfaserverstärkung in einer thermoplastischen Polymermatrix, wobei die Platte ein Bördelloch (120) umfasst, **dadurch gekennzeichnet, dass** es folgende Arbeitsschritte umfasst:
a. auf einer Schrumpfplatte (200) einen zylinderförmigen Stempel (220) mit Bund, dessen Flanken (225) die Kontur des Bördellochs (125) nachbilden, installieren und welcher auf seiner der Platte entgegengesetzten Seite eine wegstehende Druckfläche (223) aufweist, die in Bezug zu den Flanken (225) des Stempels (220) diametral im Hintergrund ist und eine Höhe (e) aufweist, die mindestens der Schichtungsstärke entspricht;
b. auf der Platte mit dem thermoplastischen Polymer vor-imprägnierte Faserbahnen (311, 312, 313, 314) auftragen (530), die einen Einschnitt für die Aufnahme des Stempels, außer an seiner Druckfläche (223), umfassen, bis die gewünschte Schichtung erreicht wird;
c. auf der Druckfläche (223) des Stempels ein steifes Glättungsblech (350) anbringen (535), dessen Fläche kleiner gleich der Fläche der Öffnung des Bördellochs (120) ist;
d. den mit einer Former-Platte, die sich der Oberfläche der in Schritt c) geschaffenen Schichtung anschmiegen kann, abgedeckten Stapel (540) verpacken;
e. die Platte (100) festigen (550, 560, 570), indem sie unter Druck einem Hitze-Kälte-Zyklus ausgesetzt wird, wobei der Zyklus ein Erwärmen auf eine Temperatur (655) umfasst, die größer gleich der Schmelztemperatur des thermoplastischen Polymers ist.

2. Verfahren nach Anspruch 1, **dadurch gekennzeichnet, dass** der Festigungsschritt e) folgende Arbeitsgänge umfasst:
ei. den Stapel bis zu einer Temperatur (656), die als Formtemperatur bezeichnet wird, erwärmen (650), ohne auf diesen einen Druck auszuüben, wobei diese Temperatur größer gleich der Glasübergangstemperatur (654) des die Matrix bildenden Polymers ist und kleiner gleich der Schmelztemperatur (655) des Polymers ist;
eii. auf den Stapel einen im Wesentlichen normalen Druck (636) ausüben, wenn die Formtemperatur (656) erreicht ist;
eiii. das Erwärmen unter Druck (636) bis zu einer Temperatur (655) fortsetzen, die größer gleich der Schmelztemperatur des die Matrix bildenden Polymers ist.

3. Verfahren nach Anspruch 1, **dadurch gekennzeichnet, dass** die Former-Platte (450) aus einem Material besteht, das auf den Stapel geformt werden kann und dass das Verfahren folgende Arbeitsschritte umfasst:
f. die Former-Platte im Rohzustand bei der Durchführung des Schrittes e) gemäß der Stapelform für die erste Platte einer Serie gemäß dem Verfahren aus Anspruch 1 formen
g. die Former-Platte (450) derart brennen, dass ihre im Arbeitsschritt f) erhaltene Form stabilisiert wird.

4. Verfahren nach Anspruch 1, **dadurch gekennzeichnet, dass** die Platte (200) eine in Bezug zur Oberfläche der Platte tiefer liegende Ausbauchung umfasst und dass das Verfahren vor dem Arbeitsschritt b) folgende Arbeitsschritte umfasst: h. in der Ausbauchung eine Verstärkungsplatte (130) bzw. einen Patch anbringen (510), die aus einer vor-gefestigten Platte eines Verbundstoffes mit Faserverstärkung in einer thermoplastischen Matrix besteht und eine Schmelztemperatur kleiner gleich der Schmelztemperatur der Matrix der in Schritt b) aufgetragenen vor-imprägnierten Bahnen aufweist.

5. Werkzeug für das Umsetzen eines Verfahrens nach Anspruch 1, **dadurch gekennzeichnet, dass** es umfasst:
i. eine Platte;
ii. einen zylinderförmigen Stempel (220) mit Bund, der eine sogenannte Montagefläche für sein von der Platte (200) wegstehendes Installieren und einen ersten Abschnitt (221) aufweist, der sich ab der Montagefläche erstreckt und dessen Flanken (225) die Kontur des Bördelloches nachbilden;
iii. ein steifes Glättungsblech (350) mit einer Größe kleiner gleich der Öffnung des Bördelloches (120), das sich am Ende des Stempels der Montagefläche gegenüberliegend abstützen kann, wobei dieses Ende eine Druckfläche (223) für das Glättungsblech bildet;
iv. eine steife Former-Platte (450).

6. Werkzeug nach Anspruch 5, **dadurch gekennzeichnet, dass** die richtungsgebende Kurve des ersten Abschnitts (221) des Stempels eine Ellipsenform hat.

7. Werkzeug nach Anspruch 6, **dadurch gekennzeichnet, dass** der Stempel (220) einen zweiten zylinderförmigen Abschnitt (222) aufweist, der in Bezug zum ersten Abschnitt (221) diametral im Hintergrund ist und an dessen Spitze sich eine im Wesentlichen zur Montagefläche parallele Druckfläche (223) befindet.

8. Werkzeug nach Anspruch 7, **dadurch gekennzeichnet, dass** die richtungsgebende Kurve des zweiten Abschnitts (222) einen geraden Abschnitt (226) umfasst.

9. Werkzeug nach Anspruch 5, **dadurch gekennzeichnet, dass** die Platte (200) eine Ausbauchung umfasst, die zu ihrem gemeinsamen Verfestigen mit der Platte ein Verstärkungselement (130) bzw. einen Patch aufweist.

## Claims

1. A method for making a panel (100) in composite material with fiber reinforcement laminated in a thermoplastic polymer matrix, wherein said panel comprises a hole (120) with a flanged edge, **characterized in that** it comprises steps of:
a. installing (500) on a laying up board (200) a shouldered cylindrical punch (220) with sides (225) that reproduce the contour of the flanged edge (125) of said hole and comprising on the side opposite that of the board a projecting support face (223) that is diametrically recessed in relation to the sides (225) of said punch (220) and with a height (e) equal to or greater than the thickness of the layered structure;
b. depositing (530) on said board strips (311, 312, 313, 314) of fibers prepregged with the thermoplastic polymer and cut out to cover the punch, except on its support face (223), until the required layered structure is obtained;
c. placing (535) on the support face (223) of the punch a rigid smoothing plate (350) with an area smaller than or equal to that of the opening of the hole (120) with a flanged edge;
d. bagging (540) the stack topped by a forming panel (450) suitable for following the surface of the layered structure created in step (c);
e. consolidating (550, 560, 570) the panel (100) by subjecting it to a cycle of heating and cooling under pressure, which cycle comprises heating to a temperature (655) above or equal to the melting temperature of the thermoplastic polymer.

2. A method according to claim 1, **characterized in that** the consolidation step (e) comprises:
ei. heating (650) the stack without applying any pressure to it up to a temperature (656) known as the forming temperature, which is above or equal to the vitreous transition temperature (654) of the polymer making up the matrix and below or equal to the melting temperature (655) of said polymer;
eii. applying pressure (636) that is substantially normal to the stack when the forming temperature (656) is reached;
eiii. continuing to heat under pressure (636) up to a temperature (655) above or equal to the melting temperature of the polymer making up the matrix.

3. A method according to claim 1, **characterized in that** the forming panel (450) is made of material suitable for being formed on the stack and **in that** the method comprises the steps of:
f. shaping the uncured forming panel into the shape of the stack while carrying out step (e) for the first panel of a series made using the method of claim 1.
g. curing the forming panel (450) so as to stabilize its shape obtained in step (f).

4. A method according to claim 1, **characterized in that** the board (200) comprises a pocket that is hollow in relation to the surface of said board and **in that** said method comprises, before step (b), the steps of:
h. placing (510) in said pocket a reinforcing plate (130) or patch made up of a pre-consolidated plate of composite material with fiber reinforcement in a thermoplastic matrix having a melting temperature equal to or below the melting temperature of the matrix of the prepregged strips deposited in step (b).

5. Tooling for implementing a method according to claim 1, **characterized in that** it comprises:
i. a board;
ii. a shouldered cylindrical punch (220) comprising a surface known as the placing surface for installing it in a projecting manner on said board (200), and comprising a first section (221) that extends from said placing surface, the sides (225) of which reproduce the contour of the flanged edge;
iii. a rigid smoothing plate (350) with an area smaller than or equal to that of the opening of the hole (120) with a flanged edge suitable for being supported by the end of the punch opposite the placing surface, which end makes up a support face (223) for said smoothing plate;
iv. a rigid forming panel (450).

6. Tooling according to claim 5, **characterized in that** the guiding curve of the first section (221) of the punch is an ellipse.

7. Tooling according to claim 6, **characterized in that** the punch (220) comprises a second cylindrical section (222) that is recessed diametrically in relation to the first section (221), at the top of which a support face (223) is located, substantially parallel to the placing surface.

8. Tooling according to claim 7, **characterized in that** the guiding curve of the second section (222) comprises a straight part (226).

9. Tooling according to claim 5, **characterized in that** the board (200) comprises a pocket suitable for receiving a reinforcing element (130) or patch for co-consolidation with the panel.
